# EUROPEAN PATENT SPECIFICATION

(11) **EP 3 173 963 B1**
(45) Date of publication and mention of the grant of the patent: **27.10.2021**
(21) Application number: 16187461.5
(22) Date of filing: 06.09.2016
(51) Int. Cl.: G06F 21/31, G06F 21/32, G06F 3/0482

(54) **UNLOCKING METHOD AND APPARATUS, COMPUTER PROGRAM AND RECORDING MEDIUM**
ENTRIEGELUNGSVERFAHREN UND -VORRICHTUNG, COMPUTERPROGRAMM UND AUFZEICHNUNGSMEDIUM
PROCÉDÉ ET DISPOSITIF D'ACQUISITION D'IMAGE, PROGRAMME INFORMATIQUE ET SUPPORT D'ENREGISTREMENT

(30) Priority: 28.11.2015 CN 201510850304
(43) Date of publication of application: 31.05.2017
(73) Proprietor: Xiaomi Inc., Beijing 100085 (CN)
(72) Inventor: HUANG, Yuanyuan, Beijing 100085 (CN); HU, Yang, Beijing 100085 (CN)
(74) Representative: Cabinet Beau de Loménie

(56) References cited:
- EP-A1- 2 733 594
- EP-A2- 2 784 711
- US-A1- 2009 006 991
- US-A1- 2012 036 556
- US-A1- 2013 322 705

## Description

### TECHNICAL FIELD

The present invention is related to the field of software applications, and more particularly, to an unlocking method and apparatus, a computer program and a recording medium.

### BACKGROUND

With popularization of fingerprint recognition technologies, fingerprint modules are no longer exclusive devices of high-end equipment. Based on fingerprint recognition technologies, the biological information such as fingerprint can be used for unlocking devices or fast payment functions or the like.

Usually, fingerprint recognition unlocking solutions are only intended to unlock cell phones before entering display interfaces of home pages, and do not have other additional functions.

Document D1 (US 2009/0006991) discloses a method for unlocking a touch screen device, in which the user, with the device in a locked state, can drag an icon to an unlock region to unlock the device and illuminate available applications. Once the applications are illuminated, the user can move the same icon to a desired application to open the application.

Document D2 (US 2013/0322705) discloses a facial and fingerprint authentication technique that can be used to unlock a device.

Document D3 (US 2012/0036556) discloses a method for unlocking a device, in which the user drags an action icon, corresponding to a requested action, to an unlock icon. The dragging of the action icon triggers an unlock operation, and the requested action is performed upon a successful unlock operation.

Document D4 (EP 2 733 594 A1) discloses a method for unlocking a mobile terminal, in which the user moves a specific icon corresponding to an application according to a preset unlock pattern gesture. The movement of the specific icon unlocks the device and executes the application.

Document D5 (EP 2 7847 11 A2) discloses a mobile terminal including: a memory that holds information in which each of a plurality of unlocking methods that releases a locked state restricting an operation is associated with an application or a category of the application; and a processor that is connected to the memory. In response to an operation to release the locked state, the processor executes a process of referring to the information and starting up or displaying an application associated with the unlocking method used to release the locked state.

### SUMMARY

The present invention is defined by the appended independent claims. Dependent claims constitute embodiments of the invention.

The technical solutions of the embodiments of this invention have the following advantageous effects:
After a user triggers screen unlocking by an unlocking operation, a corresponding application internal interface is directly reached according to pre-configured configuration information, wherein the application internal interface is an interface of an application other than a home interface thereof. When a terminal is in a screen-locked state, only by triggering a screen unlocking operation by a user, a corresponding application internal interface is directly reached, so that the time required from unlocking a screen, selecting to enter an application to entering an application internal interface of the application is greatly reduced, and the user's operations are simplified.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing an unlocking method according to an exemplary embodiment;
Fig. 1B is a flow chart showing an unlocking method according to another exemplary embodiment;
Fig. 1C is a flow chart showing an unlocking method according to yet another exemplary embodiment;
Fig. 1D is a schematic drawing of a screen-locked interface according to an exemplary embodiment;
Fig. 1E is a schematic drawing of an application internal interface according to an exemplary embodiment;
Fig. 1F is a schematic drawing of an application internal interface according to another exemplary embodiment;
Fig. 2 is a flow chart showing an unlocking method according to yet another exemplary embodiment;
Fig. 3A is a flow chart showing an unlocking method according to yet another exemplary embodiment;
Fig. 3B is a flow chart showing an unlocking method according to yet another exemplary embodiment;
Fig. 4A is a structure view of an unlocking apparatus according to an exemplary embodiment;
Fig. 4B is a structure view of an unlocking apparatus according to another exemplary embodiment;
Fig. 4C is a structure view of an unlocking apparatus according to yet another exemplary embodiment;
Fig. 5 is a structure view of an unlocking apparatus according to yet another exemplary embodiment;
Fig. 6A is a structure view of an unlocking apparatus according to yet another exemplary embodiment;
Fig. 6B is a structure view of an unlocking apparatus according to yet another exemplary embodiment;
Fig. 7 is a block view of an unlocking apparatus according to an exemplary embodiment;
Fig. 8 is a block view of an unlocking apparatus 800 according to an exemplary embodiment.

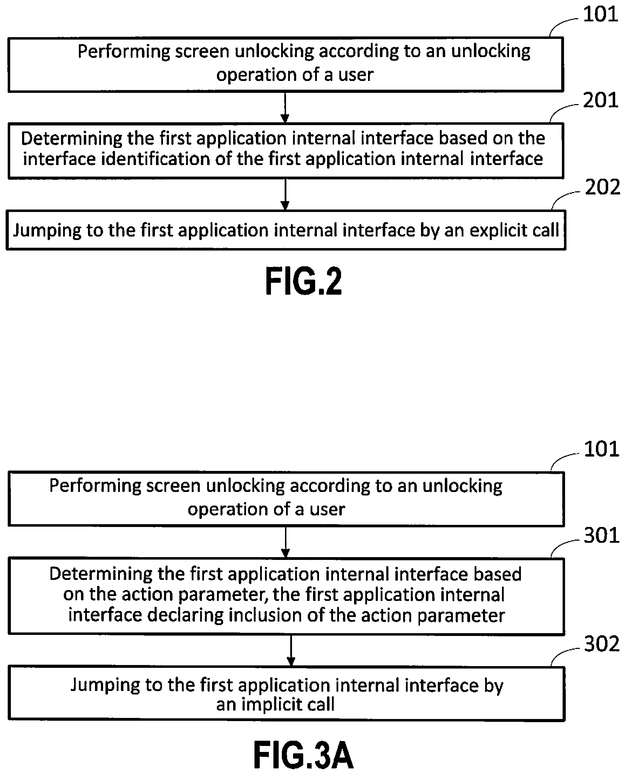

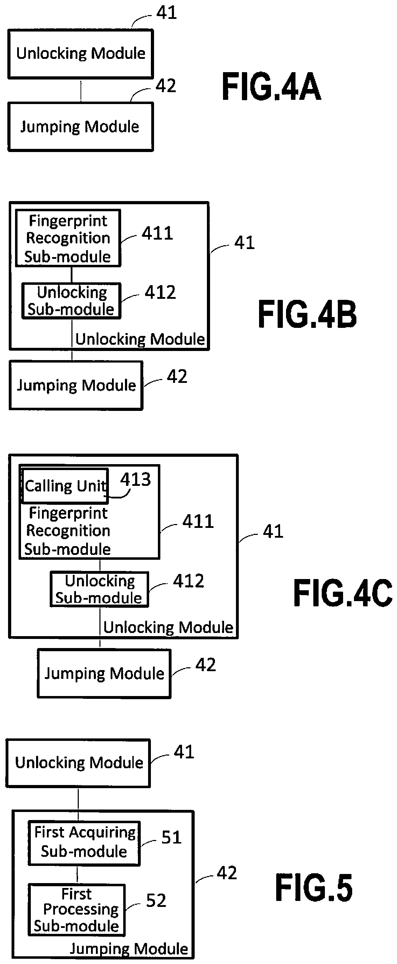

The embodiments of figures 2 and 5 are not according to the invention and are present for illustration purposes only.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

The terms mentioned in the embodiments of the present invention are explained first as below:
Applications means applications installed in terminals.

Smart terminal includes but is not limited to physical electronic products, such as cell phones and smart cell phones etc., which perform human-machine interaction with users through keyboards, touch panels, or sound-controlled devices.

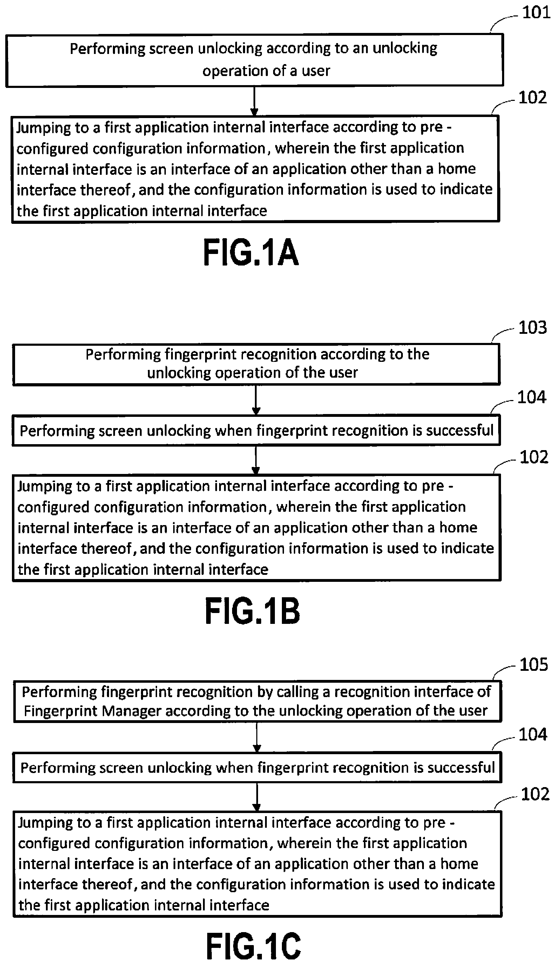

Fig. 1A is a flow chart showing an unlocking method according to an exemplary embodiment. As shown in Fig. 1A, this embodiment is described by taking the unlocking method applied to an unlocking apparatus as an example. The unlocking method may comprise the steps of:
Step 101: performing screen unlocking according to an unlocking operation of a user.

The execution subject in this embodiment may be the unlocking apparatus, which may be embedded into or may be a smart terminal. A user may perform corresponding operations through an interaction interface of the smart terminal. For example, the user may trigger execution of screen unlocking by performing an unlocking operation such as pressing a HOME key.

An example is given by illustrating an actual application scene:
When the user needs to enter an application internal interface, screen unlocking should be performed first. In this solution, unlocking is triggered by an unlocking operation of the user. The unlocking apparatus performs screen unlocking based on the user's unlocking operation to perform followed solutions.

Step 102: jumping to a first application internal interface according to pre-configured configuration information, wherein the first application internal interface is an interface of an application other than a home interface thereof, and the configuration information is used to indicate the first application internal interface.

An example is given by illustrating the above mentioned actual application scene:
After performing screen unlocking, the unlocking apparatus jumps from the current interface of the screen to a corresponding application internal interface according to the pre-configured configuration information indicating the application internal interface.

Specifically, there may be various manners for the configuration information to indicate the first application internal interface, which will not be limited in this embodiment.

Furthermore, there may be various unlocking manners, such as fingerprint unlocking. Accordingly, as shown in Fig. 1B, Fig. 1B is a flow chart showing an unlocking method according to another exemplary embodiment. Based on the method shown in Fig. 1A, the step 101 in Fig. 1B may comprise the following steps:
Step 103: performing fingerprint recognition according to the unlocking operation of the user.
Step 104: performing screen unlocking when fingerprint recognition is successful.

Specifically, after fingerprint unlocking is triggered by an unlocking operation performed by the user, such as pressing a screen unlocking key or the HOME key, a finger presses a fingerprint sensor. Using fingerprint recognition technologies, fingerprint data collected by the fingerprint sensor at the screen locking stage is acquired and calculation is performed. Then, a calculation result is compared with the fingerprint data registered by the user in advance. If the calculation result is matched successfully with any fingerprint data that is registered in advance, it is determined that fingerprint verification is successful, and then screen unlocking is performed.

In actual application, when performing fingerprint unlocking, the unlocking apparatus needs to support or have a fingerprint recognition function. Take the current terminal system as an example, when unlocking the screen, the system calls a recognition interface of Fingerprint Manager, such as Fingerprint Manager.authenticate in the Android M version, to perform fingerprint recognition. After a result of successful matching is obtained, the screen is unlocked. Accordingly, as shown in Fig. 1C, Fig. 1C is a flow chart showing an unlocking method according to yet another exemplary embodiment. Based on the method shown in Fig. 1B, the step 103 in Fig. 1C may comprise the following steps:
Step 105: performing fingerprint recognition by calling a recognition interface of Fingerprint Manager according to the unlocking operation of the user.

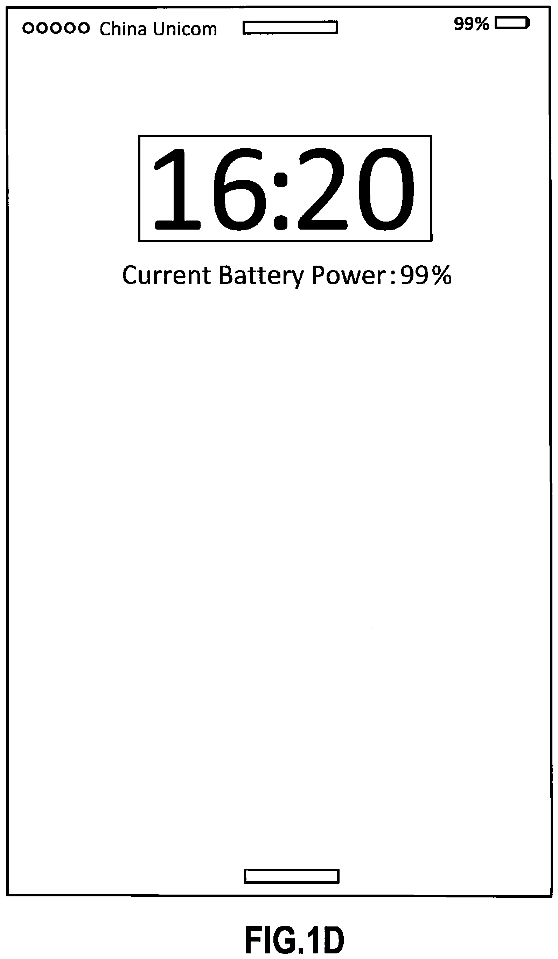

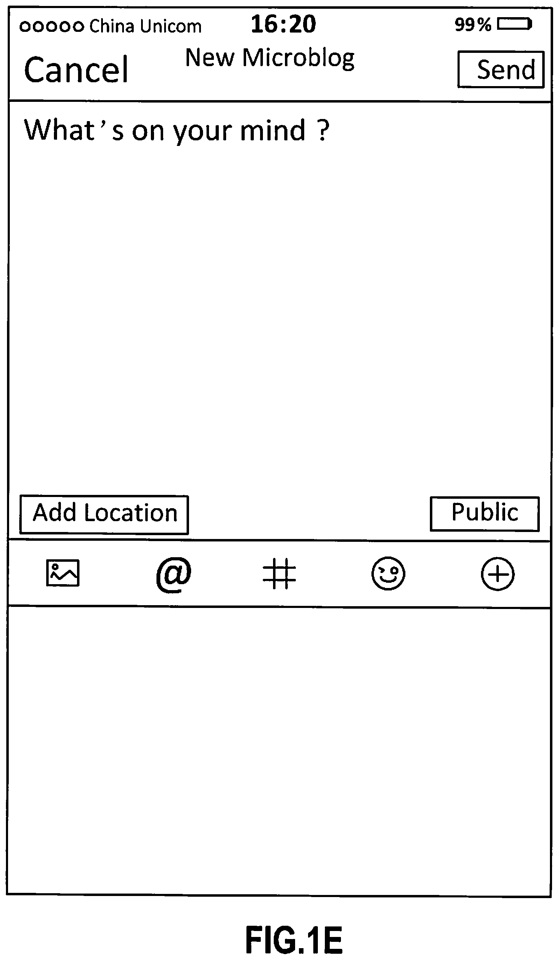

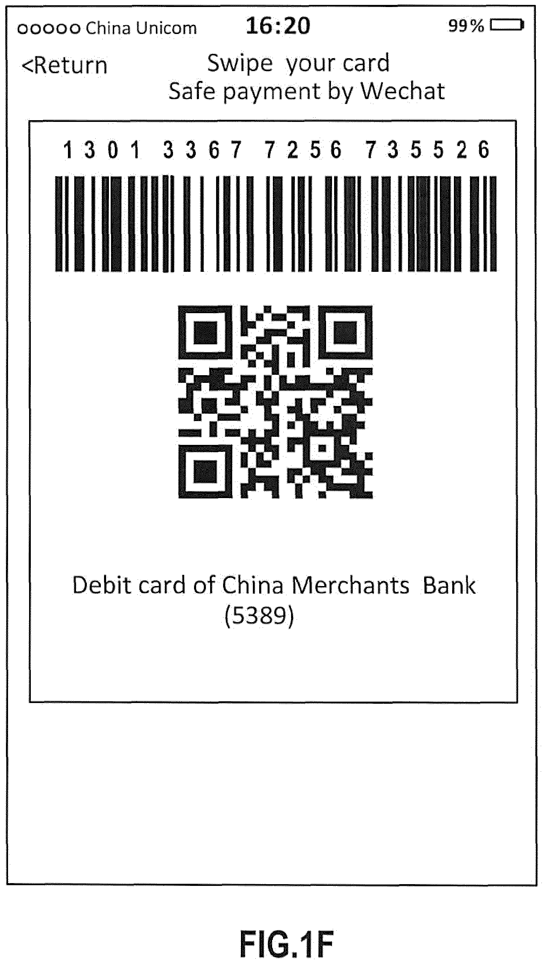

The above application internal interface refers to an interface of an application other than the home interface thereof, such as a secondary interface, a third-grade interface or the like. For example, as shown in Figs. 1D-1F, Fig. 1D is a schematic drawing of a screen-locked interface according to an exemplary embodiment; Fig. 1E is a schematic drawing of an application internal interface according to an exemplary embodiment; Fig. 1F is a schematic drawing of an application internal interface according to another exemplary embodiment.

According to the solution provided by this embodiment, the initial interface is the screen-locked interface shown in Fig. 1D. The user performs screen unlocking by performing fingerprint recognition. After unlocking, a corresponding application internal interface, such as an application internal interface of Microblog shown in Fig. 1E, i.e., an interface for publishing a new blog, or an application internal interface of Wechat shown in Fig. 1F, i.e., an interface for making a payment using Wechat, is reached according to pre-configured configuration information.

To sum up, by applying the unlocking method provided by this embodiment, after a user triggers screen unlocking by an unlocking operation, a corresponding application internal interface is directly reached according to pre-configured configuration information, wherein the application internal interface is an interface of an application other than a home interface thereof. When a terminal is in a screen-locked state, only by triggering a screen unlocking operation by a user, a corresponding application internal interface is directly reached, so that the time required from unlocking a screen, selecting to enter an application to entering an application internal interface of the application is greatly reduced, and the user's operations are simplified.

In a particular embodiment, a target interface to be jumped to can be indicated by an interface identification. Accordingly, as shown in Fig. 2, which is a flow chart showing an unlocking method according to yet another exemplary embodiment, the present embodiment is illustrated by applying the unlocking method to an unlocking apparatus. Based on any of the embodiment shown in Figs. 1A-1C, the configuration information may comprise an interface identification of the first application internal interface. Accordingly, the step 102 may comprise the following steps:
Step 201: determining the first application internal interface based on the interface identification of the first application internal interface; and
Step 202: jumping to the first application internal interface by an explicit call.

The interface identification is used to exclusively identify the first application internal interface. In actual application, an interface identification may take many forms, such as an interface name, an interface path, an interface sequence number or the like, which will not be limited in this embodiment. Specifically, jumping to an interface may include many manners. For example, an application internal interface corresponding to an interface identification in the configuration information can be called through an explicit call. Such an explicit call launches (opens) the application internal interface through the identification of the application internal interface directly.

An example is given by illustrating an actual application scene:
The unlocking apparatus performs screen unlocking according to the unlocking operation of the user. A current interface of the screen is jumped to a corresponding application internal interface based on pre-configured configuration information including an interface identification of the application internal interface.

To sum up, by applying the unlocking method provided by this embodiment, the configuration information includes an interface identification of the application internal interface to be jumped to; after the screen is unlocked, the corresponding application internal interface is reached through an explicit call according to the configuration information and an interface identification of the application internal interface, so that the user's operations are simplified.

In the invention, a target interface to be jumped to is indicated by a specific action parameter. Accordingly, as shown in Fig. 3A, which is a flow chart showing an unlocking method according to yet another exemplary embodiment, the present embodiment is illustrated by applying the unlocking method to an unlocking apparatus. Based on any of the embodiment shown in Figs. 1A-1C, the configuration information comprises a preset action parameter. An action parameter identifies the ability that the internal interface to open should have. For example, an action parameter including "xxx.xxx.mailto" refers to an internal interface having the ability to send an email. Accordingly, the step 102 may comprise the following steps:
Step 301: determining the first application internal interface based on the action parameter, the first application internal interface declaring inclusion of the action parameter; and
Step 302: jumping to the first application internal interface by an implicit call.

Specifically, jumping to an interface may be implemented in many manners. For example, an implicit call may be used to call an application internal interface declaring inclusion of the action parameter in the configuration information. Such an implicit call opens an application internal interface having the particular ability defined by the action parameter.

An example is given by illustrating an actual application scene:
The unlocking apparatus performs screen unlocking according to the unlocking operation of the user, determines the application internal interface declaring inclusion of the action parameter based on the configuration information including the preset action parameter, and jumps to the application internal interface through an implicit call.

In actual application, there may be one or more application internal interfaces declaring inclusion of the action parameter. When there is one application internal interface declaring inclusion of the action parameter, the application internal interface can be directly jumped to through an implicit call. When there are multiple application internal interfaces declaring inclusion of the action parameter, the interface to be jumped to can be further determined based on the user's need.

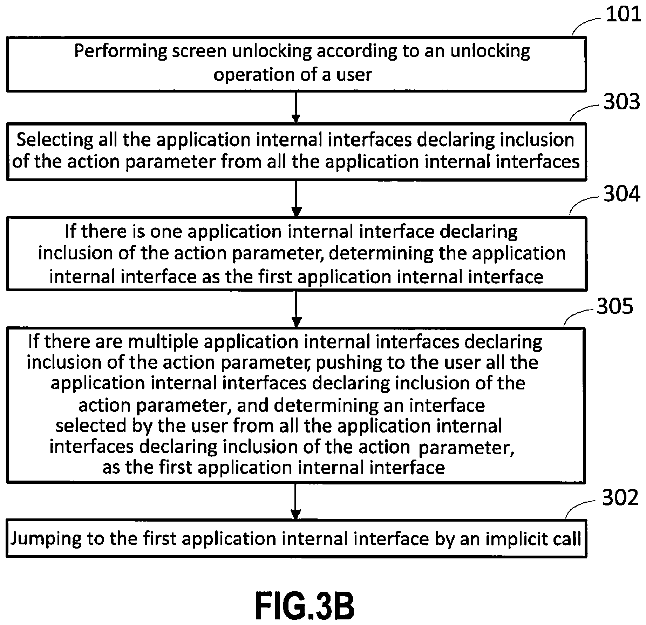

Accordingly, as shown in Fig. 3B, which is a flow chart showing an unlocking method according to yet another exemplary embodiment, the present embodiment is illustrated by applying the unlocking method to an unlocking apparatus. Based on the embodiment shown in Fig. 3A, the step 301 may comprise the following steps:
Step 303: selecting all the application internal interfaces declaring inclusion of the action parameter from all the application internal interfaces;
Step 304: if there is one application internal interface declaring inclusion of the action parameter, determining the application internal interface as the first application internal interface;
Step 305: if there are multiple application internal interfaces declaring inclusion of the action parameter, pushing to the user all the application internal interfaces declaring inclusion of the action parameter, and determining an interface selected by the user from all the application internal interfaces declaring inclusion of the action parameter as the first application internal interface.

An example is given by illustrating an actual application scene:
The unlocking apparatus performs screen unlocking according to the unlocking operation of the user; the unlocking apparatus selects all the application internal interfaces declaring inclusion of the action parameter from all the application internal interfaces based on the configuration information including the preset action parameter; depending on the number of the application internal interfaces declaring inclusion of the action parameter, if there is one application internal interface declaring inclusion of the action parameter, the unlocking apparatus determines the application internal interface as the application internal interface to be jumped to, and jumps to the application internal interface through an implicit call; if there are multiple application internal interfaces declaring inclusion of the action parameter, the unlocking apparatus pushes to the user all these application internal interfaces, and determines an interface selected therefrom by the user as the application internal interface to be jumped to, and jumps to the application internal interface through an implicit call.

The action parameter may be set according to the needs. For example, it can be a system action constant "miui.fingerprint.quicklaunch". In this embodiment, by using an implicit call, when a new application internal interface to be jumped to after screen unlocking needs to be added, it only needs to declare the action parameter in the configuration information of the application internal interface. Afterwards, when the screen is unlocked, the application internal interface can be pushed to the user as an application internal interface declaring inclusion of the action parameter. Further, the application internal interface can be jumped to according to the user's selection.

To sum up, by applying the unlocking method provided by this embodiment, the configuration information includes an action parameter; after the screen is unlocked, an application internal interface to be jumped to can be determined according to the configuration information and the application internal interface declaring inclusion of the action parameter; by using an implicit call, a corresponding application internal interface can be jumped to, so that the user's operations are simplified; when a new application internal interface to be jumped to after screen unlocking needs to be added, it only needs to declare the action parameter in the configuration information of the application internal interface, so that configuration convenience is improved.

Fig. 4A is a structure view of an unlocking apparatus according to an exemplary embodiment. As shown in Fig. 4A, the unlocking apparatus may comprise:
an unlocking module 41 configured to perform screen unlocking according to an unlocking operation of a user; and
a jumping module 42 configured to jump to a first application internal interface according to pre-configured configuration information, wherein the first application internal interface is an interface of an application other than a home interface thereof, and the configuration information is used to indicate the first application internal interface.

The unlocking apparatus may be embedded into or be a smart terminal. A user may perform operations through an interaction interface of the smart terminal to trigger execution of fingerprint recognition.

An example is given by illustrating an actual application scene:
Unlocking is triggered by an unlocking operation of a user. The unlocking module 41 performs screen unlocking according to the unlocking operation of the user. The jumping module 42 jumps from a current interface of the screen to a corresponding application internal interface according to the pre-configured configuration information, wherein the configuration information is used to indicate the application internal interface.

Specifically, there may be various manners for the configuration information to indicate the first application internal interface, which will not be limited in this embodiment.

Furthermore, there may be various screen unlocking manners for the unlocking module 41, such as fingerprint unlocking. Accordingly, as shown in Fig. 4B, which is a structure view of an unlocking apparatus according to another exemplary embodiment, based on the apparatus shown in Fig. 4A, the unlocking module 41 in Fig. 4B may comprise:
a fingerprint recognition sub-module 411 configured to perform fingerprint recognition according to the unlocking operation of the user; and
an unlocking sub-module 412 configured to perform screen unlocking when fingerprint recognition is successful.

In actual application, the unlocking apparatus needs to support or have a fingerprint recognition function. Take the current terminal system as an example, when unlocking the screen, the system calls a recognition interface of Fingerprint Manager to perform fingerprint recognition. After a result of successful matching is obtained, the screen is unlocked. Accordingly, as shown in Fig. 4C, Fig. 4C is a structure view of an unlocking apparatus according to yet another exemplary embodiment. Based on the apparatus shown in Fig. 4B, the fingerprint recognition sub-module 411 in Fig. 4C may comprise:
a calling unit 413 configured to perform fingerprint recognition by calling a recognition interface of Fingerprint Manager according to the unlocking operation of the user.

To sum up, by applying the unlocking apparatus provided by this embodiment, after a user triggers screen unlocking by an unlocking operation, a corresponding application internal interface is directly reached according to pre-configured configuration information, wherein the application internal interface is an interface of an application other than a home interface thereof. When a terminal is in a screen-locked state, only by triggering a screen unlocking operation by a user, a corresponding application internal interface is directly reached, so that the time required from unlocking a screen, selecting to enter an application to entering an application internal interface of the application is greatly reduced, and the user's operations are simplified.

Furthermore, a target interface to be jumped to can be indicated by an interface identification. Accordingly, as shown in Fig. 5, Fig. 5 is a structure view of an unlocking apparatus according to yet another exemplary embodiment. Based on any of the embodiment shown in Figs. 4A-4C, the configuration information may comprise an interface identification of the first application internal interface. Accordingly, the jumping module 42 may comprise:
a first acquiring sub-module 51 configured to determine the first application internal interface based on the interface identification of the first application internal interface; and
a first processing sub-module 52 configured to jump to the first application internal interface determined by the first acquiring sub-module 51 by an explicit call.

Specifically, jumping to an interface may be implemented in many manners. For example, an application internal interface corresponding to an interface identification in the configuration information can be called through an explicit call by the first processing sub-module 52.

An example is given by illustrating an actual application scene:
The unlocking module 41 performs screen unlocking according to the unlocking operation of the user. The first acquiring sub-module 51 determines the corresponding application internal interface based on the interface identification of the application internal interface in the configuration information. The first processing sub-module 52 jumps from the current interface of the screen to the application internal interface.

To sum up, by applying the unlocking apparatus provided by this embodiment, the configuration information includes an interface identification of the application internal interface to be jumped to; after the screen is unlocked, the corresponding application internal interface is reached through an explicit call according to the configuration information and an interface identification of the application internal interface, so that the user's operations are simplified.

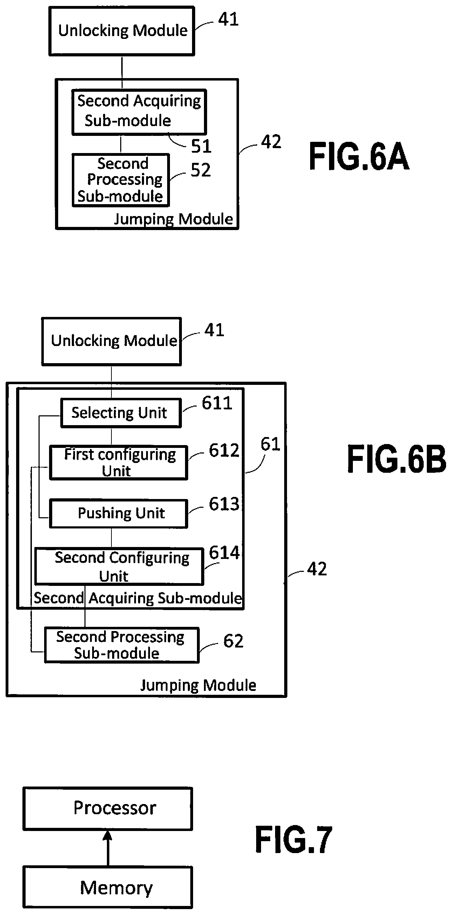

Alternatively, a target interface to be jumped to can be indicated by a specific action parameter. Accordingly, as shown in Fig. 6A, which is a structure view of an unlocking apparatus according to yet another exemplary embodiment, based on any of the embodiment shown in Figs. 4A-4C, the configuration information may comprise a preset action parameter. Accordingly, the jumping module 42 may comprise:
a second acquiring sub-module 61 configured to determine the first application internal interface based on the action parameter, the first application internal interface declaring inclusion of the action parameter;
a second processing sub-module 62 configured to jump to the first application internal interface determined by the second acquiring sub-module 61 by an implicit call.

Specifically, jumping to an interface may be implemented in many manners. For example, an application internal interface declaring inclusion of the action parameter in the configuration information can be called through an implicit call by the second processing sub-module 62.

An example is given by illustrating an actual application scene:
The unlocking module 41 performs screen unlocking according to the unlocking operation of the user. The second acquiring sub-module 61 determines the application internal interface declaring inclusion of the action parameter based on the configuration information including a preset action parameter. The second processing sub-module 62 jumps to the application internal interface through an implicit call.

In actual application, there may be one or more application internal interfaces declaring inclusion of the action parameter. When there is one application internal interface declaring inclusion of the action parameter, the application internal interface can be directly jumped to through an implicit call by the second processing sub-module 62. When there are multiple application internal interfaces declaring inclusion of the action parameter, the interface to be redirected to can be further determined based on the user's need.

Accordingly, as shown in Fig. 6B, which is a structure view of an unlocking apparatus according to yet another exemplary embodiment, based on the embodiment shown in Fig. 6A, the second acquiring sub-module 61 may comprise:
a selecting unit 611 configured to select all the application internal interfaces declaring inclusion of the action parameter from all the application internal interfaces;
a first configuring unit 612 configured to, if there is one application internal interface declaring inclusion of the action parameter and selected by the selecting unit 611, determine the application internal interface as the first application internal interface;
a pushing unit 613 configured to, if there are multiple application internal interfaces declaring inclusion of the action parameter and selected by the selecting unit 611, push to the user all the application internal interfaces declaring inclusion of the action parameter;
a second configuring unit 614 configured to determine an interface selected by the user from all the application internal interfaces declaring inclusion of the action parameter and pushed by the pushing unit 613 as the first application internal interface.

An example is given by illustrating an actual application scene:
The unlocking module 41 performs screen unlocking according to the unlocking operation of the user. The selecting unit 611 selects all the application internal interfaces declaring inclusion of the action parameter from all the application internal interfaces based on the configuration information including the preset action parameter. Depending on the number of the application internal interfaces declaring inclusion of the action parameter, if there is one application internal interface declaring inclusion of the action parameter, the first configuring unit 612 determines the application internal interface as the application internal interface to be jumped to, and the second processing sub-module 62 jumps to the application internal interface through an implicit call; if there are multiple application internal interfaces declaring inclusion of the action parameter, the pushing unit 613 pushes to the user all these application internal interfaces, the second configuring unit 614 determines an interface selected therefrom by the user as the application internal interface to be jumped to, and the second processing sub-module 62 jumps to the application internal interface through an implicit call.

The action parameter may be set according to the needs. For example, it can be a system action constant "miui.fingerprint.quicklaunch". In this embodiment, by using an implicit call, when a new application internal interface to be jumped to after screen unlocking needs to be added, it only needs to declare the action parameter in the configuration information of the application internal interface by the second processing sub-module 62.

To sum up, by applying the unlocking apparatus provided by this embodiment, the configuration information includes an action parameter; after the screen is unlocked, an application internal interface to be jumped to can be determined according to the configuration information and the application internal interface declaring inclusion of the action parameter; by using an implicit call, a corresponding application internal interface can be jumped to, so that the user's operations are simplified; when a new application internal interface to be jumped to after screen unlocking needs to be added, it only needs to declare the action parameter in the configuration information of the application internal interface, so that configuration convenience is improved.

The above describes the internal functions and structure of the unlocking apparatus.

Fig. 7 is a block view of an unlocking apparatus according to an exemplary embodiment. As shown in Fig. 7, the apparatus can be realized by comprising:
a processor; and
a memory storing an instruction executable by the processor,
wherein the processor is configured to: perform screen unlocking according to an unlocking operation of a user; and jump to a first application internal interface according to pre-configured configuration information, wherein the first application internal interface is an interface of an application other than a home interface thereof, and the configuration information is used to indicate the first application internal interface.

By applying the unlocking apparatus provided by this embodiment, after a user triggers screen unlocking by an unlocking operation, a corresponding application internal interface is directly reached according to pre-configured configuration information, wherein the application internal interface is an interface of an application other than a home interface thereof. When a terminal is in a screen-locked state, only by triggering a screen unlocking operation by a user, a corresponding application internal interface is directly reached, so that the time required from unlocking a screen, selecting to entering an application to enter an application internal interface of the application is greatly reduced, and the user's operations are simplified.

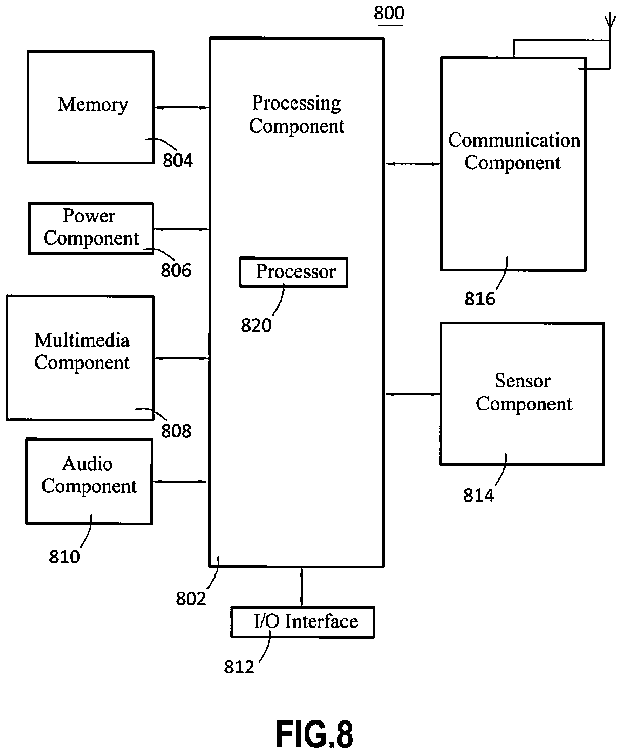

Fig. 8 is a block view of an unlocking apparatus 800 according to an exemplary embodiment. For example, the apparatus 800 may be provided as a mobile phone, a computer, a tablet, a medical device, a fitness equipment, a personal digital assistant or the like.

Referring to Fig. 8, the apparatus 800 may further comprise one or more of the following components: a processing component or processor 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power supply management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

The exemplary embodiments also provides a non-volatile computer-readable storage medium containing instructions, such as the memory 804 containing instructions which may be executed by the processing component 820 of the unlocking apparatus 800 to perform the above methods. For example, the non-volatile computer-readable storage medium may be a ROM, a RAM, a CD-ROM, a tape, a floppy disc, an optical data storage device or the like.

There is provided a non-volatile computer-readable storage medium storing instructions therein, which when executed by the processor of the unlocking apparatus, causes the unlocking apparatus to perform an unlocking method, the method comprising:
performing screen unlocking according to an unlocking operation of a user; and
jumping to a first application internal interface according to pre-configured configuration information, wherein the first application internal interface is an interface of an application other than a home interface thereof, and the configuration information is used to indicate the first application internal interface.

It will be apparent for those skilled in the art that, for the sake of convenience and conciseness, the working process of the above apparatus may refer to the corresponding process of the above described method embodiments.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An unlocking method, comprising:
performing (101,104) screen unlocking according to an unlocking operation of a user; and
jumping (102,202) to a first application internal interface according to pre-configured configuration information, wherein the first application internal interface is an interface of an application other than a home interface thereof, and the configuration information is used to indicate the first application internal interface,
wherein the configuration information comprises a preset action parameter, the action parameter identifying an ability that the first application internal interface being jumped to must have; and said jumping to a first application internal interface according to pre-configured configuration information comprises:
determining (301) the first application internal interface based on the action parameter, the first application internal interface declaring inclusion of the action parameter by declaring the action parameter in configuration information of the first application internal interface; and
jumping (302) to the first application internal interface by an implicit call, and
wherein said determining the first application internal interface based on the action parameter comprises:
selecting (303) all application internal interfaces declaring inclusion of the action parameter from all the application internal interfaces;
if there is one application internal interface declaring inclusion of the action parameter, determining (304) the application internal interface as the first application internal interface; and
if there are multiple application internal interfaces declaring inclusion of the action parameter, pushing (305) to the user all the application internal interfaces declaring inclusion of the action parameter, and determining an interface selected by the user from all the application internal interfaces declaring inclusion of the action parameter as the first application internal interface.

2. The method according to claim 1, wherein said performing screen unlocking according to an unlocking operation of a user comprises: performing (103) fingerprint recognition according to the unlocking operation of the user; and performing (104) screen unlocking when fingerprint recognition is successful.

3. The method according to claim 2, wherein said performing fingerprint recognition according to the unlocking operation of the user comprises: performing (105) fingerprint recognition by calling a recognition interface of Fingerprint Manager according to the unlocking operation of the user.

4. An unlocking apparatus, comprising:
an unlocking module (41) configured to perform screen unlocking according to an unlocking operation of a user; and
a jumping module (42) configured to jump to a first application internal interface according to pre-configured configuration information, wherein the first application internal interface is an interface of an application other than a home interface thereof, and the configuration information is used to indicate the first application internal interface,
wherein the configuration information comprises a preset action parameter, the action parameter identifying an ability that the first application internal interface being jumped to must have ; the jumping module (42) comprises:
an acquiring sub-module (61) configured to determine the first application internal interface based on the action parameter, the first application internal interface declaring inclusion of the action parameter by declaring the action parameter in configuration information of the first application internal interface; and
a processing sub-module (62) configured to jump to the first application interna interface determined by the acquiring sub-module by an implicit call, and
wherein the acquiring sub-module (61) comprises:
a selecting unit (611) configured to select all the application internal interfaces declaring inclusion of the action parameter from all the application internal interfaces;
a first configuring unit (612) configured to, if there is one application internal interface declaring inclusion of the action parameter and selected by the selecting unit, determine the application internal interface as the first application internal interface; and
a pushing unit (613) configured to, if there are multiple application internal interfaces declaring inclusion of the action parameter and selected by the selecting unit, push to the user all the application internal interfaces declaring inclusion of the action parameter; and
a second configuring unit (614) configured to determine an interface selected by the user from all the application internal interfaces declaring inclusion of the action parameter and pushed by the pushing unit as the first application internal interface.

5. The apparatus according to claim 4, wherein the unlocking module comprises:
a fingerprint recognition sub-module (411) configured to perform fingerprint recognition according to the unlocking operation of the user; and
an unlocking sub-module (412) configured to perform screen unlocking when fingerprint recognition performed by the fingerprint recognition sub-module is successful.

6. The apparatus according to claim 5, wherein the fingerprint recognition sub-module comprises: a calling unit (413) configured to perform fingerprint recognition by calling a recognition interface of Fingerprint Manager according to the unlocking operation of the user.

7. An unlocking apparatus (800) comprising:
a processor (802); and
a memory (804) storing an instruction executable by the processor,
wherein the processor is configured to perform the method of any of claims 1 to 3.

8. A computer program including instructions for executing the steps of an unlocking method according to any one of claims 1 to 3 when said program is executed by a computer.

9. A recording medium readable by a computer and having recorded thereon a computer program including instructions for executing the steps of an unlocking method according to any one of claims 1 to 3.

## Patentansprüche

1. Entsperrverfahren, umfassend:
Durchführen (101, 104) einer Bildschirmentsperrung gemäß einer Entsperroperation eines Benutzers und
Springen (102, 202) zu einer ersten anwendungsinternen Schnittstelle gemäß vorkonfigurierten Konfigurationsinformationen, wobei es sich bei der ersten anwendungsinternen Schnittstelle um eine Schnittstelle einer Anwendung handelt, die nicht deren Home-Schnittstelle ist, und die Konfigurationsinformationen verwendet werden, um die erste anwendungsinterne Schnittstelle anzugeben,
wobei die Konfigurationsinformationen einen voreingestellten Aktionsparameter umfassen, wobei der Aktionsparameter eine Fähigkeit identifiziert, die die erste anwendungsinterne Schnittstelle, zu der gesprungen wird, aufweisen muss, und das Springen zu einer ersten anwendungsinternen Schnittstelle gemäß vorkonfigurierten Konfigurationsinformationen umfasst:
Bestimmen (301) der ersten anwendungsinternen Schnittstelle auf der Grundlage des Aktionsparameters, wobei die erste anwendungsinterne Schnittstelle die Einbeziehung des Aktionsparameters durch Deklarieren des Aktionsparameters in Konfigurationsinformationen der ersten anwendungsinternen Schnittstelle deklariert, und
Springen (302) zur ersten anwendungsinternen Schnittstelle durch einen impliziten Aufruf, und
wobei das Bestimmen der ersten anwendungsinternen Schnittstelle auf der Grundlage des Aktionsparameters umfasst:
Wählen (303) aller anwendungsinternen Schnittstellen, die die Einbeziehung des Aktionsparameters deklarieren, aus allen anwendungsinternen Schnittstellen,
wenn es eine anwendungsinterne Schnittstelle gibt, die die Einbeziehung des Aktionsparameters deklariert, Bestimmen (304) der anwendungsinternen Schnittstelle als die erste anwendungsinterne Schnittstelle, und
wenn es mehrere anwendungsinterne Schnittstellen gibt, die die Einbeziehung des Aktionsparameters deklarieren, Übermitteln (305) aller anwendungsinternen Schnittstellen, die die Einbeziehung des Aktionsparameters deklarieren, an den Benutzer, und Bestimmen einer vom Benutzer aus allen anwendungsinternen Schnittstellen, die die Einbeziehung des Aktionsparameters deklarieren, ausgewählten Schnittstelle als erste anwendungsinterne Schnittstelle.

2. Verfahren nach Anspruch 1, wobei das Durchführen der Bildschirmentsperrung gemäß einer Entsperroperation eines Benutzers umfasst: Durchführen (103) einer Fingerabdruckerkennung gemäß der Entsperroperation des Benutzers und Durchführen (104) der Bildschirmentsperrung, wenn die Fingerabdruckerkennung erfolgreich ist.

3. Verfahren nach Anspruch 2, wobei das Durchführen der Fingerabdruckerkennung gemäß der Entsperroperation des Benutzers umfasst:
Durchführen (105) der Fingerabdruckerkennung durch Aufrufen einer Erkennungsschnittstelle des Fingerabdruckmanagers gemäß der Entsperroperation des Benutzers.

4. Entsperrvorrichtung, umfassend:
ein Entsperrmodul (41), das konfiguriert ist, um eine Bildschirmentsperrung gemäß einer Entsperroperation eines Benutzers durchzuführen, und
ein Sprungmodul (42), das konfiguriert ist, um gemäß vorkonfigurierten Konfigurationsinformationen zu einer ersten anwendungsinternen Schnittstelle zu springen, wobei es sich bei der ersten anwendungsinternen Schnittstelle um eine Schnittstelle einer Anwendung handelt, die nicht deren Home-Schnittstelle ist, und die Konfigurationsinformationen verwendet werden, um die erste anwendungsinterne Schnittstelle anzugeben,
wobei die Konfigurationsinformationen einen voreingestellten Aktionsparameter umfassen, wobei der Aktionsparameter eine Fähigkeit identifiziert, die die erste anwendungsinterne Schnittstelle, zu der gesprungen wird, aufweisen muss, und das Sprungmodul (42) umfasst:
ein Erfassungsuntermodul (61), das konfiguriert ist, um die erste anwendungsinterne Schnittstelle auf der Grundlage des Aktionsparameters zu bestimmen, wobei die erste anwendungsinterne Schnittstelle die Einbeziehung des Aktionsparameters durch Deklarieren des Aktionsparameters in Konfigurationsinformationen der ersten anwendungsinternen Schnittstelle deklariert, und
ein Verarbeitungsuntermodul (62), das konfiguriert ist, um zu der ersten anwendungsinternen Schnittstelle zu springen, die von dem Erfassungsuntermodul durch einen impliziten Aufruf bestimmt wird, und
wobei das Erfassungsuntermodul (61) umfasst:
eine Auswahleinheit (611), die konfiguriert ist, um aus allen anwendungsinternen Schnittstellen alle anwendungsinternen Schnittstellen auszuwählen, die die Einbeziehung des Aktionsparameters deklarieren,
eine erste Konfigurationseinheit (612), die konfiguriert ist, um, wenn es eine anwendungsinterne Schnittstelle gibt, die die Einbeziehung des Aktionsparameters deklariert und durch die Auswahleinheit ausgewählt wurde, die anwendungsinterne Schnittstelle als die erste anwendungsinterne Schnittstelle zu bestimmen, und
eine Übermittlungseinheit (613), die konfiguriert ist, um, wenn es mehrere anwendungsinterne Schnittstellen gibt, die die Einbeziehung des Aktionsparameters deklarieren und von der Auswahleinheit ausgewählt wurden, dem Benutzer alle anwendungsinternen Schnittstellen zu übermitteln, die die Einbeziehung des Aktionsparameters deklarieren, und
eine zweite Konfigurationseinheit (614), die konfiguriert ist, um eine Schnittstelle als die erste anwendungsinterne Schnittstelle zu bestimmen, die von dem Benutzer aus allen anwendungsinternen Schnittstellen ausgewählt wurde, die die Einbeziehung des Aktionsparameters deklarieren und von der Übermittlungseinheit übermittelt wurden.

5. Vorrichtung nach Anspruch 4, wobei das Entsperrmodul umfasst:
ein Fingerabdruckerkennungsuntermodul (411), das konfiguriert ist, um eine Fingerabdruckerkennung gemäß der Entsperroperation des Benutzers durchzuführen, und
ein Entsperruntermodul (412), das konfiguriert ist, um eine Bildschirmentsperrung durchzuführen, wenn die durch das Fingerabdruckerkennungsuntermodul durchgeführte Fingerabdruckerkennung erfolgreich ist.

6. Vorrichtung nach Anspruch 5, wobei das Fingerabdruckerkennungsuntermodul umfasst: eine Aufrufeinheit (413), die konfiguriert ist, um eine Fingerabdruckerkennung durch Aufrufen einer Erkennungsschnittstelle des Fingerabdruckmanagers gemäß der Entsperroperation des Benutzers durchzuführen.

7. Entsperrvorrichtung (800), umfassend:
einen Prozessor (802) und
einen Speicher (804), der einen vom Prozessor ausführbaren Befehl speichert,
wobei der Prozessor dazu konfiguriert ist, das Verfahren nach einem der Ansprüche 1 bis 3 durchzuführen.

8. Computerprogramm mit Anweisungen zum Ausführen der Schritte eines Entsperrverfahrens nach einem der Ansprüche 1 bis 3, wenn das Programm von einem Computer ausgeführt wird.

9. Aufzeichnungsmedium, das von einem Computer gelesen werden kann und auf dem ein Computerprogramm mit Anweisungen zum Ausführen der Schritte eines Entsperrverfahrens nach einem der Ansprüche 1 bis 3 aufgezeichnet ist.

## Revendications

1. Procédé de déverrouillage, comprenant :
la réalisation (101, 104) d'un déverrouillage d'écran selon une opération de déverrouillage d'un utilisateur ; et
le passage (102, 202) à une première interface interne d'application selon des informations de configuration préconfigurées, dans lequel la première interface interne d'application est une interface d'une application autre qu'une interface d'accueil de celle-ci, et les informations de configuration sont utilisées pour indiquer la première interface interne d'application,
dans lequel les informations de configuration comprennent un paramètre d'action prédéfini, le paramètre d'action identifiant une capacité que la première interface interne d'application à laquelle on passe doit posséder ; et ledit passage à une première interface interne d'application selon des informations de configuration préconfigurées comprend :
la détermination (301) de la première interface interne d'application sur la base du paramètre d'action, la première interface interne d'application déclarant une inclusion du paramètre d'action par la déclaration du paramètre d'action dans des informations de configuration de la première interface interne d'application ; et
le passage (302) à la première interface interne d'application par un appel implicite, et
dans lequel ladite détermination de la première interface interne d'application sur la base du paramètre d'action comprend :
la sélection (303) de toutes les interfaces internes d'application déclarant une inclusion du paramètre d'action parmi toutes les interfaces internes d'application ;
s'il y a une interface interne d'application déclarant une inclusion du paramètre d'action, la détermination (304) de l'interface interne d'application comme étant la première interface interne d'application ; et
s'il y a de multiples interfaces internes d'application déclarant une inclusion du paramètre d'action, la présentation (305) à l'utilisateur de toutes les interfaces internes d'application déclarant une inclusion du paramètre d'action, et la détermination d'une interface sélectionnée par l'utilisateur parmi toutes les interfaces internes d'application déclarant une inclusion du paramètre d'action comme étant la première interface interne d'application.

2. Procédé selon la revendication 1, dans lequel ladite réalisation d'un déverrouillage d'écran selon une opération de déverrouillage d'un utilisateur comprend : la réalisation (103) d'une reconnaissance d'empreinte digitale selon l'opération de déverrouillage de l'utilisateur ; et la réalisation (104) d'un déverrouillage d'écran lorsque la reconnaissance d'empreinte digitale est réussie.

3. Procédé selon la revendication 2, dans lequel ladite réalisation d'une reconnaissance d'empreinte digitale selon l'opération de déverrouillage de l'utilisateur comprend : la réalisation (105) d'une reconnaissance d'empreinte digitale par l'appel d'une interface de reconnaissance de gestionnaire d'empreintes digitales selon l'opération de déverrouillage de l'utilisateur.

4. Appareil de déverrouillage, comprenant :
un module de déverrouillage (41) configuré pour réaliser un déverrouillage d'écran selon une opération de déverrouillage d'un utilisateur ; et
un module de passage (42) configuré pour passer à une première interface interne d'application selon des informations de configuration préconfigurées, dans lequel la première interface interne d'application est une interface d'une application autre qu'une interface d'accueil de celle-ci, et les informations de configuration sont utilisées pour indiquer la première interface interne d'application,
dans lequel les informations de configuration comprennent un paramètre d'action prédéfini, le paramètre d'action identifiant une capacité que la première interface interne d'application à laquelle on passe doit posséder ; le module de passage (42) comprend :
un sous-module d'acquisition (61) configuré pour déterminer la première interface interne d'application sur la base du paramètre d'action, la première interface interne d'application déclarant une inclusion du paramètre d'action par la déclaration du paramètre d'action dans des informations de configuration de la première interface interne d'application ; et
un sous-module de traitement (62) configuré pour passer à la première interface interne d'application déterminée par le sous-module d'acquisition par un appel implicite, et
dans lequel le sous-module d'acquisition (61) comprend :
une unité de sélection (611) configurée pour sélectionner toutes les interfaces internes d'application déclarant une inclusion du paramètre d'action parmi toutes les interfaces internes d'application ;
une première unité de configuration (612) configurée pour, s'il y a une interface interne d'application déclarant une inclusion du paramètre d'action et sélectionnée par l'unité de sélection, déterminer l'interface interne d'application comme étant la première interface interne d'application ; et
une unité de présentation (613) configurée pour, s'il y a de multiples interfaces internes d'application déclarant une inclusion du paramètre d'action et sélectionnées par l'unité de sélection, présenter à l'utilisateur toutes les interfaces internes d'application déclarant une inclusion du paramètre d'action ; et
une seconde unité de configuration (614) configurée pour déterminer une interface sélectionnée par l'utilisateur parmi toutes les interfaces internes d'application déclarant une inclusion du paramètre d'action et présentée par l'unité de présentation comme étant la première interface interne d'application.

5. Appareil selon la revendication 4, dans lequel le module de déverrouillage comprend :
un sous-module de reconnaissance d'empreinte digitale (411) configuré pour réaliser une reconnaissance d'empreinte digitale selon l'opération de déverrouillage de l'utilisateur ; et
un sous-module de déverrouillage (412) configuré pour réaliser un déverrouillage d'écran lorsque la reconnaissance d'empreinte digitale réalisée par le sous-module de reconnaissance d'empreinte digitale est réussie.

6. Appareil selon la revendication 5, dans lequel le sous-module de reconnaissance d'empreinte digitale comprend : une unité d'appel (413) configurée pour réaliser une reconnaissance d'empreinte digitale par l'appel d'une interface de reconnaissance de gestionnaire d'empreintes digitales selon l'opération de déverrouillage de l'utilisateur.

7. Appareil de déverrouillage (800) comprenant :
un processeur (802) ; et
une mémoire (804) stockant une instruction exécutable par le processeur,
dans lequel le processeur est configuré pour réaliser le procédé selon l'une quelconque des revendications 1 à 3.

8. Programme d'ordinateur incluant des instructions pour exécuter les étapes d'un procédé de déverrouillage selon l'une quelconque des revendications 1 à 3 lorsque ledit programme est exécuté par un ordinateur.

9. Support d'enregistrement lisible par un ordinateur et sur lequel est enregistré un programme d'ordinateur incluant des instructions pour exécuter les étapes d'un procédé de déverrouillage selon l'une quelconque des revendications 1 à 3.
